# EUROPEAN PATENT APPLICATION

(11) **EP 4 586 369 A1**
(43) Date of publication of application: **16.07.2025**
(21) Application number: 22958440.4
(22) Date of filing: 15.09.2022
(51) Int. Cl.: H01M 10/6557

(54) **THERMAL MANAGEMENT COMPONENT, BOX ASSEMBLY, BATTERY, AND ELECTRIC APPARATUS**

(71) Applicant: CONTEMPORARY AMPEREX TECHNOLOGY (HONG KONG) LIMITED, Hong Kong (HK)
(72) Inventor: CHEN, Xiaobo, Ningde, Fujian 352100 (CN); WANG, Xuehui, Ningde, Fujian 352100 (CN); GAO, Xiongwei, Ningde, Fujian 352100 (CN); HU, Lu, Ningde, Fujian 352100 (CN)
(74) Representative: Kraus & Lederer PartGmbB
(86) International application number: PCT/CN2022/119067
(87) International publication number: WO 2024/055247

(57) **Abstract**

This application relates to a thermal management component (201), a box assembly (200), a battery (10), and an electrical device. The thermal management component (201) is applicable to the battery (10). The battery (10) includes a battery cell (110). The thermal management component (201) includes: a first heat exchange portion (210) and a second heat exchange portion (220). The first heat exchange portion (210) is configured to exchange heat with the battery cell (110). The second heat exchange portion (220) is configured to exchange heat with emissions of the battery cell (110). In this way, the first heat exchange portion (210) of the thermal management component (201) can be utilized to exchange heat with the battery cell (110), and further, the second heat exchange portion (220) can be utilized to exchange heat with the emissions of the battery cell (110), so that the internal temperature of the battery (10) can be prevented from being increased by overtemperature of runaway gas generated by a thermally runaway battery cell (110), thereby improving safety of the battery (10) and reducing safety hazards of the battery (10).

## Description

### TECHNICAL FIELD

This application relates to the technical field of batteries, and in particular, to a thermal management component, a box assembly, a battery, and an electrical device.

### BACKGROUND

In the related art, thermal management is usually performed for a battery cell of a battery by using a thermal management component (such as a water cooling plate). However, conventional batteries are prone to great safety hazards.

### SUMMARY

In view of the situation above, it is necessary to provide a thermal management component, a box assembly, a battery, and an electrical device to tackle the problem of great safety hazards in a conventional battery.

According to a first aspect, this application provides a thermal management component applicable to a battery. The battery includes a battery cell. The thermal management component includes a first heat exchange portion and a second heat exchange portion. The first heat exchange portion is configured to exchange heat with the battery cell. The second heat exchange portion is configured to exchange heat with emissions of the battery cell.

In this way, the first heat exchange portion of the thermal management component can be utilized to exchange heat with the battery cell, and further, the second heat exchange portion can be utilized to exchange heat with the emissions of the battery cell, so that the internal temperature of the battery can be prevented from being increased by overtemperature of runaway gas generated by the thermally runaway battery cell, thereby improving safety of the battery and reducing safety hazards of the battery.

In an embodiment, the thermal management component includes an exhaust space. The exhaust space is configured to receive or guide the emissions of the battery cell. The exhaust space is configured to allow heat exchange between the emissions of the battery cell and the second heat exchange portion. In this way, the emissions of the battery cell are received or guided by the exhaust space, and heat can be exchanged between the emissions and the second heat exchange portion, thereby implementing thermal management on the emissions of the battery cell effectively, and preventing the internal temperature of the battery from being increased by overtemperature of runaway gas generated by a thermally runaway battery cell.

In an embodiment, the second heat exchange portion includes an interface piece and an accommodation cavity. The accommodation cavity is configured to accommodate a heat exchange medium. The interface piece is configured to communicate the accommodation cavity and the exhaust space so that the heat exchange medium can reach the exhaust space through the interface piece. The heat exchange medium in the accommodation cavity can be released into the exhaust space by using the interface piece, so that the heat exchange medium can exchange heat with the emissions of the battery cell received or guided in the exhaust space.

In an embodiment, an inlet of the interface piece is connected to the accommodation cavity. An outlet of the interface piece is oriented toward the exhaust space. The heat exchange medium in the accommodation cavity may be released into the exhaust space through the inlet of the interface piece and the outlet of the interface piece, so as to exchange heat with the emissions of the battery cell received or guided in the exhaust space.

In an embodiment, the exhaust space extends along a first direction. An exit direction of the interface piece intersects the first direction. In this way, the emissions entering the exhaust space can flow along the first direction, and can well converge with the heat exchange medium released from the outlet of the interface piece, so that the emissions entering the exhaust space can exchange heat with this part of heat exchange medium more sufficiently, thereby improving the effect of heat exchange.

In an embodiment, the thermal management component further includes a receiving portion. The receiving portion is disposed corresponding to the battery cell so as to allow the emissions of the battery cell to reach the exhaust space through the receiving portion. An exit direction of the interface piece intersects a receiving direction of the receiving portion. The emissions of the battery cell can reach the exhaust space through the receiving portion. The emissions reaching the exhaust space can exchange heat with the heat exchange medium reaching the exhaust space, so as to reduce the internal temperature of the battery and improve the safety of the battery. In addition, the heat exchange medium ejected from the outlet of the interface piece is not released toward the battery cell, thereby avoiding perturbations caused by two air streams ejected toward each other. In addition, this part of heat exchange medium can well converge with the emissions of the battery cell in the exhaust space, thereby not only avoiding overtemperature in the battery, but also reducing the safety hazards effectively.

In an embodiment, the thermal management component includes two interface pieces disposed adjacent to each other along a second direction. Along the second direction, the receiving portion is disposed between the two adjacent interface pieces. In this way, both interface pieces can release the heat exchange medium into the exhaust space, and the emissions of the battery cell can flow into the exhaust space, and exchange heat with the heat exchange medium released into the exhaust space, thereby improving the efficiency of heat exchange.

In an embodiment, a plurality of interface pieces spaced apart along a third direction are disposed on the second heat exchange portion. The outlet of each of the plurality of interface pieces is disposed along a second direction. The plurality of interface pieces on the same second heat exchange portion correspond one-to-one with a plurality of receiving portions. The second direction intersects the third direction. In this way, the heat exchange medium in the accommodation cavity can be released into the exhaust space faster through the plurality of interface pieces. The emissions of the battery cell reach the exhaust space through the receiving portion. Because the exit direction of the interface piece intersects the receiving direction of the receiving portion, this part of emissions can well converge with the heat exchange medium in the exhaust space, and perturbations generated by the two air streams can be avoided, thereby not only avoiding overtemperature in the battery, but also effectively reducing the safety hazards.

In an embodiment, the interface piece includes a connecting channel and a switching portion. The connecting channel is configured to be able to communicate the accommodation cavity and the exhaust space when the switching portion is turned on. In a case of thermal runaway of the battery cell, the switching portion is turned on, and the heat exchange medium in the accommodation cavity can reach the exhaust space through the connecting channel to exchange heat with the emissions in the exhaust space.

In an embodiment, the switching portion is configured to be a hot-melt structure, an electrically actuated switch, or a fragile structure.

In an embodiment, the thermal management component includes a thermal management frame. The thermal management frame and the first heat exchange portion come together peripherally to form the exhaust space. The second heat exchange portion is disposed in the exhaust space to exchange heat with the emissions of the battery cell. In a case of thermal runaway of the battery cell, the emissions of the battery cell can flow into the exhaust space, and the second heat exchange portion in the exhaust space can well exchange heat with this part of emissions.

In an embodiment, the thermal management component includes an exhaust piece. The exhaust piece is configured to form the exhaust space. The first heat exchange portion, the second heat exchange portion, and the exhaust piece are stacked up. This facilitates heat exchange between the heat exchange medium released by the second heat exchange portion and the emissions expelled into the exhaust space. In addition, the stacked structure can well reduce the overall size of the thermal management component.

In an embodiment, the first heat exchange portion and the exhaust piece are located on two sides of the second heat exchange portion respectively. This enables the battery cell to extend along the stacking direction and be disposed on one side of the thermal management component, and enables the first heat exchange portion to exchange heat with the battery cell. In addition, the heat exchange medium in the accommodation cavity of the second heat exchange portion is enabled to reach the exhaust space through the interface piece, and exchange heat with the emissions of the battery cell.

In an embodiment, the exhaust piece is located between the first heat exchange portion and the second heat exchange portion. The battery cell may be disposed on a side of the first heat exchange portion, the side facing away from the exhaust piece, thereby reducing the footprint of the battery cell and the thermal management component to a greater degree.

In an embodiment, two second heat exchange portions are disposed and stacked up. The exhaust space is defined between the two second heat exchange portions. The interface piece is disposed on a surface of at least one of the second heat exchange portions, the surface being oriented toward the exhaust space. At least one of the two second heat exchange portions releases the heat exchange medium into the exhaust space through the interface piece, so as to exchange heat with the emissions of the battery cell.

In an embodiment, two first heat exchange portions are disposed on outer surfaces of the two second heat exchange portions respectively. The battery cell may be disposed between the two first heat exchange portions, and the battery cell is located on one side of the exhaust space along a direction perpendicular to the stacking direction of the second heat exchange portion. The two first heat exchange portions exchange heat with the battery cell simultaneously. At least one of the two second heat exchange portions releases the heat exchange medium into the exhaust space through the interface piece, so as to exchange heat with the emissions of the battery cell.

According to a second aspect, this application further provides a box assembly, including the thermal management component.

In an embodiment, the thermal management component includes an exhaust piece. The exhaust piece is configured to form the exhaust space. The first heat exchange portion, the second heat exchange portion, and the exhaust piece are stacked up. The thermal management component is configured to be at least one of a top structure, a bottom structure, a side beam, or a middle beam of the box assembly. In this way, heat exchange can be well performed for the battery cell and the emissions of the battery cell by using the thermal management component.

In an embodiment, two second heat exchange portions are disposed and stacked up. The exhaust space is defined between the two second heat exchange portions. The interface piece is disposed on a surface of at least one of the second heat exchange portions, the surface being oriented toward the exhaust space. The thermal management component is configured to be a middle beam of the box assembly. This makes it convenient to perform thermal management on the battery cells and the emissions of the battery cells on both sides of the thermal management component simultaneously by using one thermal management component.

According to a third aspect, this application further provides a battery. The battery includes a battery cell and the box assembly. The box assembly includes an electrical cavity. The battery cell is accommodated in the electrical cavity. The electrical cavity can communicate with the exhaust space so that the exhaust space can receive or guide the emissions of the battery cell.

In an embodiment, the electrical cavity is located on one side of the thermal management component. In this way, the exhaust space can receive or guide the emissions of the battery cell, so that the second heat exchange portion of the thermal management component can well exchange heat with the emissions of the battery cell. In addition, the first heat exchange portion of the thermal management component can well exchange heat with the battery cell.

In an embodiment, the thermal management component is configured to be a middle beam of the box assembly, and a plurality of electrical cavities are created and distributed on two sides of the thermal management component. In this way, the battery cell can be disposed in each electrical cavity. Thermal management can be performed for the battery cells and the emissions of the battery cells on both sides by using one thermal management component. In addition, the overall structure of the battery is more compact.

According to a fourth aspect, this application further provides a battery. The battery includes a plurality of battery cells and the thermal management component.

In an embodiment, the box assembly is the thermal management component. The thermal management component further includes a receiving portion. The receiving portion is disposed corresponding to the battery cell so as to allow the emissions of the battery cell to reach the exhaust space through the receiving portion. An exit direction of the interface piece intersects a receiving direction of the receiving portion. The battery cell includes a pressure relief mechanism. The pressure relief mechanism is disposed toward the receiving portion. In this way, the emissions ejected by the pressure relief mechanism of the battery cell can more smoothly flow into the exhaust space through the receiving portion.

In an embodiment, a plurality of the battery cells are disposed, and a plurality of the receiving portions are disposed. The pressure relief mechanisms of the plurality of battery cells are configured to correspond one-to-one with the plurality of receiving portions. In this way, the emissions ejected by the pressure relief mechanism of the battery cell can flow into the exhaust space through the corresponding receiving portion.

According to a fifth aspect, this application further provides an electrical device. The electrical device includes the battery disclosed above.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to an embodiment of this application;
FIG. 2 is a schematic structural diagram of a battery according to an embodiment of this application;
FIG. 3 is a lateral cross-sectional view (from a first viewing angle) of a battery according to an embodiment of this application;
FIG. 4 is a close-up view of a part A shown in FIG. 3;
FIG. 5 is a lateral cross-sectional view (from a second viewing angle) of a battery according to an embodiment of this application;
FIG. 6 is a close-up view of a part B shown in FIG. 5;
FIG. 7 is a schematic structural diagram of a thermal management component 201 and a receiving portion according to an embodiment of this application;
FIG. 8 is a top view of a thermal management component 201 and a receiving portion according to an embodiment of this application;
FIG. 9 is a schematic diagram of a partial structure of a battery according to an embodiment of this application;
FIG. 10 is a schematic structural diagram of a first heat exchange portion according to an embodiment of this application; and
FIG. 11 is a schematic structural diagram of a thermal management plate according to an embodiment of this application.

List of reference numerals: 1. vehicle; 10. battery; 100. battery module; 110. battery cell; 111. pressure relief mechanism; 200. box assembly; 201. thermal management component; 210. first heat transfer portion; 2101. heat exchange hole; 211. exhaust port; 2111. first exhaust port; 2112. second exhaust port; 212. heat exchange cavity; 213. fluid inlet tube; 214. fluid outlet tube; 215. thermal management plate; 220. second heat exchange portion; 221. interface piece; 2211. outlet; 222. accommodation cavity; 231. thermal management frame; 231. thermal management frame; 2311. exhaust space; 232. battery frame; 2321. electrical cavity; 2322. gas collection cavity; 2323. outer frame; 2324. inner frame; 233. pressure relief component; 240. receiving portion; 241. vent hole; 242. receiving cavity; 20. controller; 30. motor.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

A battery includes a battery cell. In the battery, thermal management is usually performed for the battery cell of the battery by using a thermal management component (such as a water cooling plate). However, conventional batteries are prone to great safety hazards.

Through research, the inventor of this application finds that the great safety hazards of conventional batteries are attributable to the following reasons: in a conventional battery, the runaway gas generated by a thermally runaway battery cell is not cooled down, so that the temperature of the runaway gas generated by the thermally runaway battery cell is overly high and increases the internal temperature of the battery, thereby resulting in great safety hazards in the conditional battery.

To solve the problem of the conventional batteries incurring great safety hazards, through in-depth research, the inventor of this application has designed a thermal management component. The thermal management component can perform thermal management on both the battery cell and the emissions generated by the thermally runaway battery cell, so as to avoid overtemperature in the battery, and effectively reduce the safety hazards of the battery.

The thermal management component, box assembly, battery cell/battery disclosed in embodiments of this application are applicable to, but not limited to use in, electrical devices such as a vehicle, watercraft, or aircraft. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like. A power supply system of the electrical devices may contain the battery cell, the battery, and the like disclosed in this application, so as to conveniently provide power drive for the electrical device.

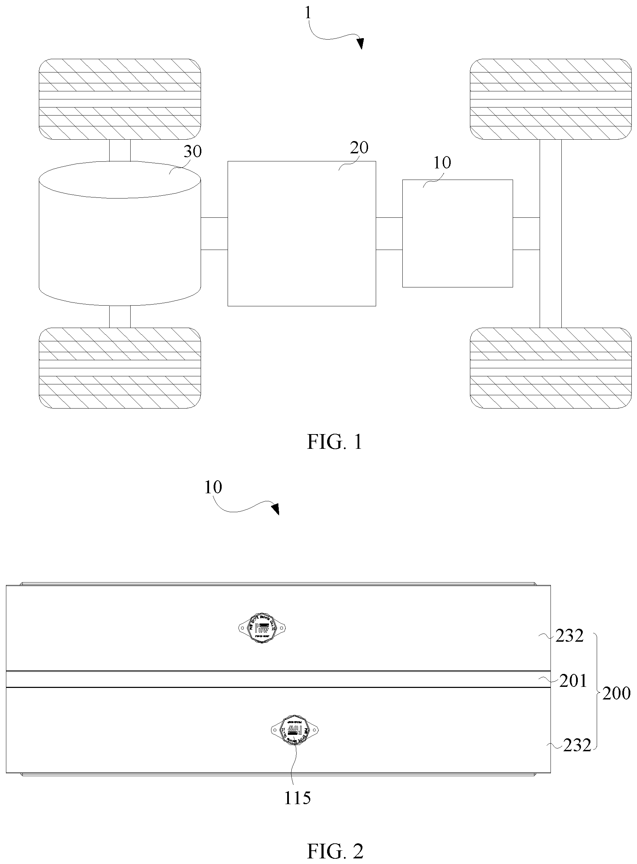

Referring to FIG. 1, FIG. 1 is a schematic structural diagram of a vehicle 1 according to some embodiments of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A battery 10 is disposed inside the vehicle 1. The battery 10 may be disposed at the bottom, front, or rear of the vehicle 1. The battery 10 may be configured to supply power to the vehicle 1. For example, the battery 10 may serve as an operating power supply of the vehicle 1. The vehicle 1 may further include a controller 20 and a motor 30. The controller 20 is configured to control the battery 10 to supply power to the motor 30, for example, to meet electrical energy requirements in starting, navigating, or running the vehicle 1.

In some embodiments, the battery 10 serves not only as an operating power supply of the vehicle 1, but may also serve as a driving power supply of the vehicle 1 to provide driving power for the vehicle 1 in place of or partly in place of fuel oil or natural gas.

FIG. 2 is a schematic structural diagram of a battery 10 according to an embodiment of this application.

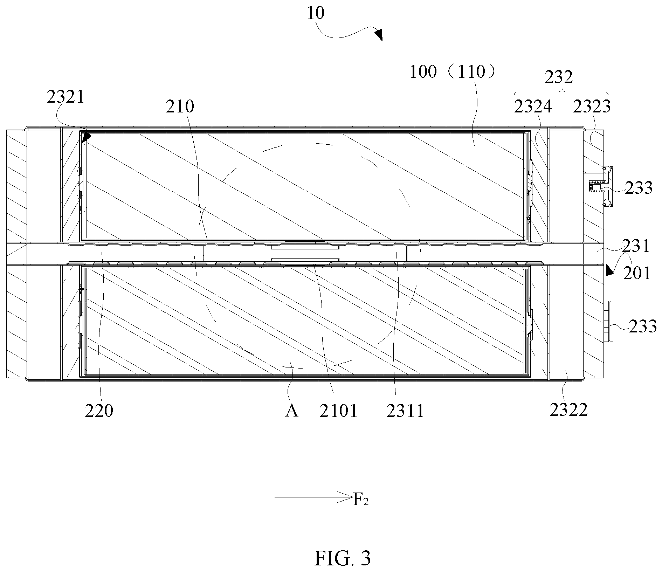

Referring to FIG. 2 together with FIG. 3, an embodiment of this application provides a thermal management component 201 applicable to a battery 10. The battery 10 includes a battery cell 110. The thermal management component 201 includes: a first heat exchange portion 210 and a second heat exchange portion 220. The first heat exchange portion 210 is configured to exchange heat with the battery cell 110. The second heat exchange portion 220 is configured to exchange heat with emissions of the battery cell 110.

The first heat exchange portion 210 means a component capable of thermally managing the battery cell 110. The first heat exchange portion 210 may include one heat exchange cavity 212 configured to accommodate a heat exchange medium, so that the battery cells 110 are thermally managed by using the heat exchange cavity 212. Alternatively, the first heat exchange portion may include heat exchange cavities 212 configured to accommodate the heat exchange medium and corresponding one-to-one with the battery cells 110, so that the corresponding battery cells 110 are thermally managed by using the heat exchange medium in the heat exchange cavities 212. The implementation of the first heat exchange portion is not particularly limited herein.

The first heat exchange portion 210 may be in direct or indirect contact with the battery cell 110 to exchange heat with the battery cell 110.

The second heat exchange portion 210 may be disposed on one side of the battery cell 110 and can exchange heat with the emissions of the battery cell 110. For example, the emissions of the battery cell 110 are collected in a space, and heat is exchanged with the emissions of the battery cell 110 by using a sidewall of the space. For another example, the emissions of the battery cell 110 are collected in a space, and the second heat exchange portion 210 can release a heat exchange medium into the space to exchange heat with the emissions of the battery cell 110. This application is not limited to such examples.

The emissions of the battery cell 110 may be a high-temperature substance ejected from a pressure relief mechanism 111 of the battery cell 110. The high-temperature substance includes gases and gas-borne solids.

In this way, the first heat exchange portion 210 of the thermal management component 201 can be utilized to exchange heat with the battery cell 110, and further, the second heat exchange portion 220 can be utilized to exchange heat with the emissions of the battery cell 110, so that the internal temperature of the battery 10 can be prevented from being increased by overtemperature of runaway gas generated by the thermally runaway battery cell 120, thereby improving safety of the battery 10.

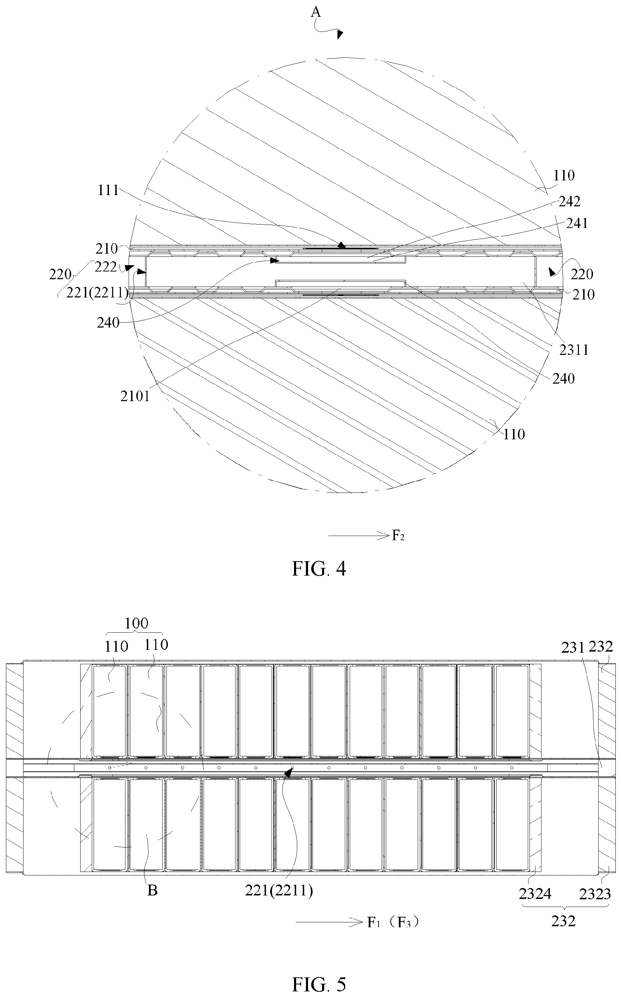

In some embodiments, referring to FIG. 3 and FIG. 4, the thermal management component 201 includes an exhaust space 2311. The exhaust space 2311 is configured to receive or guide the emissions of the battery cell 110. The exhaust space 2311 is configured to allow heat exchange between the emissions of the battery cell 110 and the second heat exchange portion 220.

The second heat exchange portion 220 may be independent of the exhaust space 2311, for example, disposed outside the exhaust space 2311. Alternatively, the second heat exchange portion 220 is disposed inside the exhaust space 2311, so that the second heat exchange portion 220 can exchange heat with the emissions of the battery cell 110 received or guided in the exhaust space 2311.

The "second heat exchange portion 220" mentioned above may be a component containing a heat exchange medium and fitted with an interface piece 221, so as to be able to release the heat exchange medium into the exhaust space 2311 in a case of thermal runaway of the battery cell 110, and in turn, exchange heat with the emissions. Alternatively, the "second heat exchange portion 220" may be another component capable of releasing the heat exchange medium into the exhaust space 2311 by use of the interface piece 221 in the case of thermal runaway of the battery cell 110. Alternatively, the "second heat exchange portion 220" may be a component capable of directly contacting and exchanging heat with the emissions of the battery cell 110. The form of the second heat exchange portion is not particularly limited herein.

In this way, the emissions of the battery cell 110 are received or guided by the exhaust space 2311, and heat can be exchanged between the emissions and the second heat exchange portion 220, thereby implementing thermal management on the emissions of the battery cell 110 effectively, and preventing the internal temperature of the battery 10 from being increased by overtemperature of runaway gas generated by a thermally runaway battery cell 120.

In some embodiments, referring to FIG. 4, the second heat exchange portion 220 includes an interface piece 221 and an accommodation cavity 222. The accommodation cavity 222 is configured to accommodate a heat exchange medium. The interface piece is configured to communicate the accommodation cavity 222 and the exhaust space 2311 so that the heat exchange medium can reach the exhaust space 211 through the interface piece.

The interface piece 221 may be a nozzle that is in communication with the accommodation cavity 222 and the exhaust space 2311 separately, or a pipe that is in communication with the accommodation cavity 222 and the exhaust space 2311 separately, or another component for communicating the accommodation cavity 222 with the exhaust space 2311. The form of the interface piece is not limited.

The interface piece 221 may include a component capable of being hot melt to form a cracked portion in a case of thermal runaway of the battery cell 110 (for example, a hot-meltable component is disposed at and clogs the outlet 2211 of the interface piece 221). Alternatively, the interface piece may include a component thermally expansible to form a cracked portion in a case of thermal runaway of the battery cell 110 (for example, a component containing a thermally expansible material is disposed at and clogs the outlet 2211 of the interface piece 221). Alternatively, an electrically actuated switch may be disposed at the outlet of the interface piece 221, and the electrically actuated switch is capable of being turned on in a case of thermal runaway of the battery cell 110. Alternatively, the interface piece is in another form capable of releasing the heat exchange medium into the exhaust space 2311 in response to thermal runaway of the battery cell 110. The form of the interface piece is not particularly limited herein.

The heat exchange medium in the accommodation cavity 222 can be released into the exhaust space 211 by using the interface piece 221, so that the heat exchange medium can exchange heat with the emissions of the battery cell 110 received or guided in the exhaust space 2311.

In some embodiments, the interface piece 221 is configured to be able to spray atomized heat exchange medium into the exhaust space 2311 in a case of thermal runaway of the battery cell 110. The atomized heat exchange medium sprayed by the interface piece 221 into the exhaust space 2311 can more efficiently exchange heat with the emissions flowing into the exhaust space 2311. The atomized heat exchange medium can be more conveniently expelled together with the emissions out of the exhaust space 2311 for centralized treatment.

In some embodiments, an inlet of the interface piece 221 is connected to the accommodation cavity 222. An outlet 2211 of the interface piece 221 is oriented toward the exhaust space 2311.

Understandably, the heat exchange medium in the accommodation cavity 222 may be released into the exhaust space 2311 through the inlet of the interface piece 221 and the outlet 2211 of the interface piece 221. For example, the interface piece is a nozzle, and can spray the heat exchange medium in the accommodation cavity 222 into the exhaust space 2311, so as to exchange heat with the emissions of the battery cell 110 received or guided in the exhaust space 2311.

In some embodiments, the exhaust space 2311 extends along a first direction F1. An exit direction of the interface piece 221 intersects the first direction.

That the exhaust space 2311 extends along the first direction F1 may be: the exhaust port 211 communicating with the exhaust space 2311 is located on one side of the exhaust space 2311 along the first direction F1; or, the exhaust port 211 communicating with the exhaust space 2311 is located on two opposite sides of the exhaust space 2311 along the first direction F1; or, another exhaust method is applied which can guide the emissions flowing into the exhaust space 2311 to flow along the first direction F1, without being particularly limited herein.

In this way, the emissions entering the exhaust space 2311 can flow along the first direction F1, and can well converge with the heat exchange medium released from the outlet of the interface piece 221, so that the emissions entering the exhaust space 2311 can exchange heat with this part of heat exchange medium more sufficiently, thereby improving the effect of heat exchange.

In some embodiments, the thermal management component 201 further includes a receiving portion 240. The receiving portion 240 is disposed corresponding to the battery cell 110 so as to allow the emissions of the battery cell 110 to reach the exhaust space 2311 through the receiving portion 240. An exit direction of the interface piece 221 intersects a receiving direction of the receiving portion 240.

"The receiving portion 240 is disposed corresponding to the battery cell 110" may be: the receiving portions 240 correspond one-to-one with the battery cells 110, or one receiving portion 240 corresponds to a plurality of battery cells 110, without being particularly limited herein.

The receiving portion 240 may include a cavity or hole capable of receiving the emissions of the battery cell 110 and communicating with the exhaust space 2311. Further, the receiving portion 240 may include a hot-melt structure, a fragile structure, or an electrically actuated switch to be described below, so that the emissions of the battery cell can reach the exhaust space 2311 through the receiving portion 240 in a case of thermal runaway of the battery cell 110. This is not particularly limited herein.

In this way, the emissions of the battery cell 110 can reach the exhaust space 2311 through the receiving portion 240. The emissions reaching the exhaust space 2311 can exchange heat with the heat exchange medium reaching the exhaust space 2311, so as to reduce the internal temperature of the battery 10 and improve the safety of the battery 10. In addition, the heat exchange medium ejected from the outlet 2211 of the interface piece 221 is not released toward the battery cell 110, thereby avoiding perturbations caused by two air streams ejected toward each other. In addition, this part of heat exchange medium can well converge with the emissions of the battery cell 110 in the exhaust space 2311, thereby not only avoiding overtemperature in the battery 10, but also reducing the safety hazards effectively.

In some embodiments, referring to FIG. 3 and FIG. 4, the thermal management component 201 includes two interface pieces 221 disposed adjacent to each other along a second direction F2. Along the second direction F2, the receiving portion 240 is disposed between the two adjacent interface pieces 221.

"The thermal management component 201 includes two interface pieces 221 disposed adjacent to each other along a second direction F2" may be: (i) the thermal management component 201 includes two second heat exchange portions 220 spaced apart along the second direction F2, an interface piece 221 is disposed on each second heat exchange portion 200, and the two adjacent interface pieces 221 in the two second heat exchange portions 200 are disposed opposite to each other along the second direction F2; or (ii) one second heat exchange portion 220 includes two interface pieces 221 disposed adjacent to each other along the second direction F2. This is not particularly limited herein.

In this way, both interface pieces 221 can release the heat exchange medium into the exhaust space 2311, and the emissions of the battery cell 110 can flow into the exhaust space 2311, and exchange heat with the heat exchange medium released into the exhaust space 2311, thereby improving the efficiency of heat exchange. In addition, the mixed gas subjected to heat exchange can be expelled through the exhaust space 2311 for centralized treatment. In this way, the emissions of the battery cell 110 can be thermally managed by using the thermal management component 201, thereby avoiding overtemperature in the battery 10, and greatly reducing the safety hazards of the battery 10.

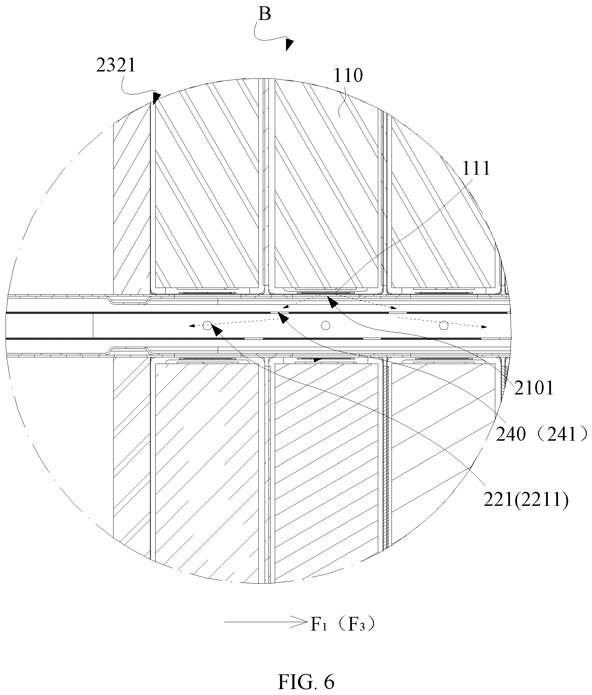

In some embodiments, referring to FIG. 5 and FIG. 6, a plurality of interface pieces 221 spaced apart along a third direction F3 are disposed on the second heat exchange portion 220. The outlet 2211 of each of the plurality of interface pieces 221 is disposed along a second direction F2. The plurality of interface pieces 221 on the same second heat exchange portion 220 correspond one-to-one with a plurality of receiving portions 240. The second direction F2 intersects the third direction F3.

The third direction F3 may be parallel to the first direction F1, or may intersect the first direction F1, without being particularly limited herein. As an example, FIG. 5 shows an example in which the third direction F3 is parallel to the first direction F1.

In this way, the heat exchange medium in the accommodation cavity 222 can be released into the exhaust space 2311 faster through the plurality of interface pieces 221. The emissions of the battery cell 110 reach the exhaust space 2311 through the receiving portion 240. Because the exit direction of the interface piece 221 intersects the receiving direction of the receiving portion 240, this part of emissions can well converge with the heat exchange medium in the exhaust space 2311, and perturbations generated by the two air streams can be avoided, thereby not only avoiding overtemperature in the battery 10, but also effectively reducing the safety hazards.

In some embodiments, the interface piece 221 includes a connecting channel and a switching portion. The connecting channel is configured to be able to communicate the accommodation cavity 222 and the exhaust space 2311 when the switching portion is turned on.

In a case of thermal runaway of the battery cell 110, the switching portion is turned on, and the heat exchange medium in the accommodation cavity 222 can reach the exhaust space 2311 through the connecting channel to exchange heat with the emissions in the exhaust space 2311.

The connecting channel communicates with the inlet of the interface piece 221 and the outlet 2211 of the interface piece 221 separately. The switching portion may be disposed at the outlet 2211 of the interface piece 221, or the switching portion may be disposed at the inlet of the interface piece 221, or the switching portion may be disposed on the connecting channel. The position of the switching portion is not particularly limited herein.

In some embodiments, the switching portion is configured to be a hot-melt structure, an electrically actuated switch, or a fragile structure; or is configured to be a structure of a chemical material that can react with fumes.

The switching portion may be a hot-melt structure that is disposed at and clogs the connecting channel or the outlet 2211 of the interface piece 221. The hot-melt structure is configured to melt to form a cracked portion when the temperature of the gas in the exhaust space 2311 reaches a preset temperature, so that the outlet 2211 can communicate with the exhaust space 2311 through the cracked portion.

The "hot-melt structure" is a component that is meltable when the temperature of the gas in the exhaust space 2311 reaches the preset temperature. The hot-melt structure may be made of a temperature-sensitive material or another material that is meltable when the temperature of the gas in the exhaust space 2311 reaches the preset temperature. The material is not particularly limited herein. The preset temperature may be 60 °C to 100 °C.

When the battery cell 110 is thermally runaway, the emissions of the battery cell 110 can flow into the exhaust space 2311. In this way, the hot-melt structure located at the outlet 2211 in the exhaust space 2311 can melt to form a cracked portion when the preset temperature is reached. Therefore, the heat exchange medium in the interface piece 221 is sprayed into the exhaust space 2311 through the cracked portion, and the temperature of the high-temperature substance ejected from the battery cell 110 is reduced, thereby avoiding overtemperature in the battery 10 and reducing safety hazards of the battery 10.

In some other embodiments, the switching portion is an electrically actuated switch, for example, a battery switch disposed at the outlet 2211 of the interface piece 221. The electrically actuated switch is configured to be turned on in a case of thermal runaway of the battery cell 110.

When the battery cell 110 is thermally runaway, the emissions of the battery cell 110 can flow into the exhaust space 2311. In this way, the electrically actuated switch located at the outlet 2211 in the exhaust space 2311 can be turned on. Therefore, the heat exchange medium in the interface piece 221 flows into the exhaust space 2311 through the outlet 2211, thereby reducing the temperature of the emissions of the battery cell 110, avoiding overtemperature in the battery 10, and reducing safety hazards of the battery 10.

In some embodiments, referring to FIG. 3 and FIG. 4, the thermal management component 201 includes a thermal management frame 231. The thermal management frame 231 and the first heat exchange portion 210 come together peripherally to form the exhaust space 2311. The second heat exchange portion 220 is disposed in the exhaust space 2311 to exchange heat with the emissions of the battery cell 110.

In this way, in a case of thermal runaway of the battery cell 110, the emissions of the battery cell 110 can flow into the exhaust space 2311, and the second heat exchange portion 220 in the exhaust space 2311 can well exchange heat with this part of emissions.

In some other embodiments (not shown in the drawings), the thermal management component 201 includes an exhaust piece. The exhaust piece is configured to form the exhaust space 2311. The first heat exchange portion 210, the second heat exchange portion 220, and the exhaust piece are stacked up.

"The first heat exchange portion 210, the second heat exchange portion 220, and the exhaust piece are stacked up" may mean that one of the first heat exchange portion 210, the second heat exchange portion 220, or the exhaust piece is placed between the other two. For example, the first heat exchange portion 210 and the exhaust piece are located on the two sides of the second heat exchange portion 220 respectively. For another example, the exhaust piece is located between the first heat exchange portion 210 and the second heat exchange portion 220, without being particularly limited herein.

For example, in some embodiments (not shown in the drawings), the thermal management component 201 may be disposed on one side of the battery cell 110. The exhaust piece is located between the first heat exchange portion 210 and the second heat exchange portion 220. The battery cell 110 is disposed on one side of the first heat exchange portion 210, the side facing away from the exhaust piece, thereby reducing the footprint of the battery cell 110 and the thermal management component 201 to a greater extent, and making it convenient to thermally manage the battery cell by using the first heat exchange portion 210. A heat exchange hole 2101 that communicates with the exhaust space 2311 may be created on the first heat exchange portion 210. In this way, the heat exchange medium in the accommodation cavity 222 of the second heat exchange portion 220 can reach the exhaust space 2311 through the interface piece 221. In addition, the emissions of the battery cell 110 can flow into the exhaust space 2311 through the heat exchange hole 2101 of the first heat exchange portion 210, and exchange heat with the heat exchange medium in the exhaust space 2311, thereby reducing the temperature of the emissions of the battery cell 110 and improving the safety of the battery 10.

For another example, in some other embodiments (not shown in the drawings), the thermal management component 201 includes a first heat exchange portion 210, a second heat exchange portion 220, and an exhaust piece that are stacked up in sequence. In other words, the first heat exchange portion 210 and the exhaust piece are located on the two sides of the second heat exchange portion 220 respectively. This enables the battery cell 110 to extend along the stacking direction and be disposed on one side of the thermal management component 201, and enables the first heat exchange portion 210 to exchange heat with the battery cell 110. In addition, the heat exchange medium in the accommodation cavity 222 of the second heat exchange portion 220 is enabled to reach the exhaust space 2311 through the interface piece 221, and exchange heat with the emissions of the battery cell 110.

In still some other embodiments (not shown in the drawings), two second heat exchange portions 220 are disposed and stacked up. The exhaust space 2311 is defined between the two second heat exchange portions 220. The interface piece 221 is disposed on a surface of at least one of the second heat exchange portions 211, the surface being oriented toward the exhaust space 2311.

At least one of the two second heat exchange portions 210 releases the heat exchange medium into the exhaust space 2311 through the interface piece 221, so as to exchange heat with the emissions of the battery cell 110.

In these embodiments (not shown in the drawings), two first heat exchange portions 210 are disposed on outer surfaces of the two second heat exchange portions 220 respectively.

The battery cell 110 may be located between the two first heat exchange portions 210, and the battery cell 110 is located on one side of the exhaust space 2311 along a direction perpendicular to the stacking direction of the second heat exchange portion 220. In this way, the two first heat exchange portions 210 exchange heat with the battery cell 110 simultaneously. At least one of the two second heat exchange portions 210 releases the heat exchange medium into the exhaust space 2311 through the interface piece 221, so as to exchange heat with the emissions of the battery cell 110.

A box assembly 200 according to an embodiment of this application includes the thermal management component 201.

In some embodiments, the thermal management component 201 includes the exhaust piece. The exhaust piece is configured to form the exhaust space 2311. The first heat exchange portion 210, the second heat exchange portion 220, and the exhaust piece are stacked up. The thermal management component 201 is configured to be at least one of a top structure, a bottom structure, a side beam, or a middle beam of the box assembly 200.

The thermal management component 201 is configured to be at least one of the top structure, the bottom structure, the side beam, or the middle beam of the box assembly 200. The thermal management component 201 may be at least one of the top structure, the bottom structure, the side beam, or the middle beam. For example, the thermal management component 201 may be the top structure of the box assembly 200. The battery cell 110 is disposed on one side of the top structure of the box assembly 200. In this way, heat exchange can be performed for the battery cell 110 on one side and the emissions of the battery cell by using the thermal management component 201. Definitely, the circumstance of the thermal management component 201 being the bottom structure, the side beam, or the middle beam may be understood in a similar way with reference to the circumstance of the thermal management component 201 being the top structure of the box assembly 200, details of which are omitted herein. FIG. 1 shows an example in which the thermal management component 201 is configured to be a middle beam of the box assembly 200.

In some embodiments, two second heat exchange portions 220 are disposed and stacked up. The exhaust space 2311 is defined between the two second heat exchange portions 220. The interface piece 221 is disposed on a surface of at least one of the second heat exchange portions 220, the surface being oriented toward the exhaust space 2311. The thermal management component 201 is configured to be a middle beam of the box assembly 200.

The middle beam of the box assembly 200 may be a crossbeam or a longitudinal beam. The battery cells 110 are distributed on two sides of the crossbeam or longitudinal beam along the thickness direction of the beams.

The battery cell 110 may be disposed at the top or bottom of the middle beam of the box assembly 200. In this way, the interface piece 221 of at least one of the second heat exchange portions 210 releases the heat exchange medium into the exhaust space 2311, so as to exchange heat with the emissions of the battery cell 110.

In some embodiments, this application provides a battery 10. The battery 10 includes a battery cell 110 and the box assembly 200, the box assembly 200 includes an electrical cavity 2321, and the battery cell 110 is accommodated in the electrical cavity 2321.

The electrical cavity 2321 can communicate with the exhaust space 2311 so that the exhaust space 2311 can receive or guide the emissions of the battery cell 110.

"The electrical cavity 2321 can communicate with the exhaust space 2311" may mean that the electrical cavity 2321 communicates with the exhaust space 2311 through a hole on the box assembly 200; or, the hot-melt structure, fragile structure, electrically actuated switch, or the like is disposed on the box assembly 200, so that the electrical cavity 2321 communicates with the exhaust space 2311 in a case of thermal runaway of the battery cell 110. This application is not limited to such examples.

In this way, thermal management can be performed for the battery cells 110 in the box assembly 200 and the emissions of the battery cells 110 by using the thermal management component 201 of the box assembly 200.

"The battery 10 includes a battery cell 110 and the box assembly 200, the box assembly 200 includes an electrical cavity 2321, and the battery cell 110 is accommodated in the electrical cavity 2321" may include: the electrical cavity 2321 is located on one side of the thermal management component 201.

The electrical cavity 2321 can communicate with the exhaust space 2311. In this way, the exhaust space 2311 can receive or guide the emissions of the battery cell 110, so that the second heat exchange portion 220 of the thermal management component 201 can well exchange heat with the emissions of the battery cell 110. In addition, the first heat exchange portion 210 of the thermal management component 201 can well exchange heat with the battery cell 110.

Alternatively, "The battery 10 includes a battery cell 110 and the box assembly 200, the box assembly 200 includes an electrical cavity 2321, and the battery cell 110 is accommodated in the electrical cavity 2321" may include: the electrical cavity 2321 is located on one side of the thermal management component 201, the electrical cavity 2321 can communicate with the exhaust space 2311, and the thermal management component 201 is configured to be at least one of the top structure, the bottom structure, the side beam, or the middle beam of the box assembly 200.

The thermal management component 201 is configured to be at least one of the top structure, the bottom structure, the side beam, or the middle beam of the box assembly 200. The thermal management component 201 may be at least one of the top structure, the bottom structure, the side beam, or the middle beam. For example, the thermal management component 201 may be the top structure of the box assembly 200. The box assembly 200 peripherally forms the electrical cavity 2321. The battery cell 110 is accommodated in the electrical cavity 2321. Understandably, the thermal management component 201 is equivalent to a top wall of the electrical cavity 2321. In this way, heat exchange can be performed for the battery cell 110 in the electrical cavity 2321 on one side and the emissions of the battery cell by using the thermal management component 201. Definitely, the circumstance of the thermal management component 201 being the bottom structure, the side beam, or the middle beam may be understood in a similar way with reference to the circumstance of the thermal management component 201 being the top structure of the box assembly 200, details of which are omitted herein. FIG. 1 shows an example in which the thermal management component 201 is configured to be a middle beam of the box assembly 200.

In this way, heat exchange can be well performed for the battery cell 110 in the electrical cavity 2321 on one side and the emissions of the battery cell by using the thermal management component 201.

In some embodiments, as shown in FIG. 2, the box assembly 200 includes a thermal management component 201 and a battery frame 232. As shown in FIG. 3, both the battery frame 232 and the thermal management frame 2311 of the thermal management component 201 are connected to the first heat exchange portion 210 along the thickness direction of the first heat exchange portion 210. The first heat exchange portion 210 and the thermal management frame 231 come together peripherally to form an exhaust space 2311. The first heat exchange portion 210 and the battery frame 232 come together peripherally to form an electrical cavity 2321 configured to accommodate the battery cell 110. A heat exchange hole 2101 (as shown in FIG. 4) communicating with the electrical cavity 2321 and the exhaust space 2311 separately is created on the first heat exchange portion 210.

When the battery 10 is in use, in a case of thermal runaway, the battery cell 110 ejects emissions into the electrical cavity 2321. When this part of emissions pass through the heat exchange hole 2101 of the first heat exchange portion 210 and flow into the exhaust space 2311, this part of emissions can exchange heat with the inner wall of the heat exchange hole 2101 to cool down the emissions for a first time. The second heat exchange portion 220 can exchange heat with the emissions flowing into the exhaust space 2311, so as to cool down the emissions for a second time. In this way, the temperature of the emissions ejected by the battery cell 110 can be reduced greatly by using the thermal management component 201, thereby avoiding overtemperature in the battery 10 and greatly reducing the safety hazards of the battery 10.

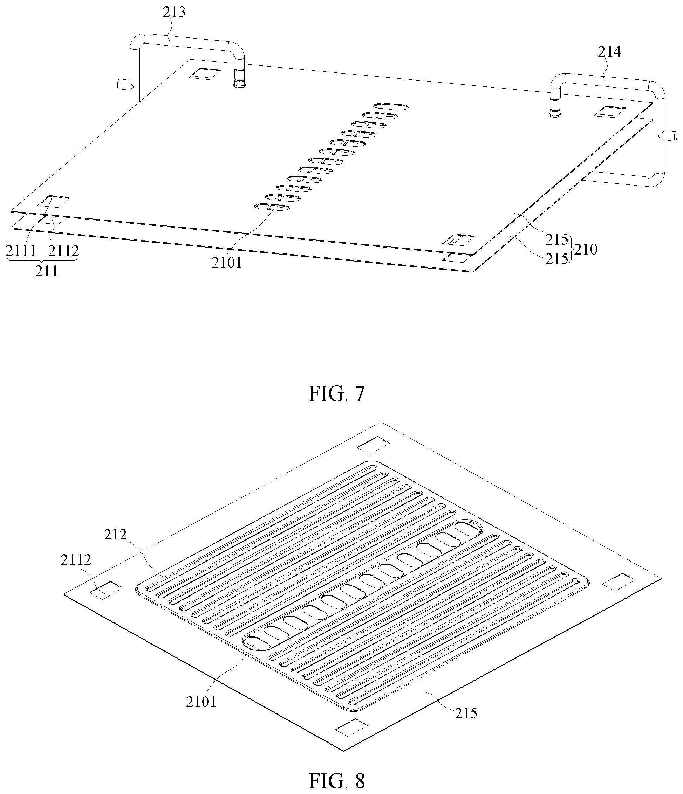

In some embodiments, referring to FIG. 7 and FIG. 8, the first heat exchange portion 210 includes two thermal management plates 215 stacked up. At least one heat exchange cavity 212 is defined between the two thermal management plates 215. A fluid inlet tube 213 and a fluid outlet tube 214 that communicate with the heat exchange cavity 212 separately are disposed on one of the thermal management plates 215. A fluid flowing into the heat exchange cavity 212 from the fluid inlet tube 213 is configured to exchange heat with the battery cell 110.

The heat exchange cavity 212 is configured to accommodate a heat exchange medium, so as to exchange heat with the battery cell 110. One heat exchange cavity 212 may be disposed alone, or a plurality of heat exchange cavities 212 corresponding one-to-one with the battery cell 110 may be defined between the two thermal management plates, without being particularly limited herein.

The heat exchange medium can flow into the heat exchange cavity 212 from the fluid inlet tube 213, and flow out of the heat exchange cavity 212 from the fluid outlet tube 214, so as to exchange heat with the battery cell 110 by using a circulating heat exchange medium.

In some embodiments, referring to FIG. 3, the battery frame 232 includes an outer frame 2323 forming a cavity and an inner frame 2324 located in the cavity of the outer frame 2323. The inner frame 2324 and the corresponding first heat exchange portion 210 come together peripherally to form an electrical cavity 2321. The outer frame 2323, the inner frame 2324, and the corresponding first heat exchange portion 210 come together peripherally to form a gas collection cavity 2322 communicating with the exhaust space 2311. A pressure relief component 233 is disposed on the outer frame 2323. The pressure relief component 233 is configured to make the gas collection cavity 2322 communicate with the external environment through the pressure relief component 233 when the pressure of the gas in the gas collection cavity 2322 reaches a preset pressure value.

The emissions ejected from the pressure relief mechanism 111 of the battery cell 110 flow into the exhaust space 2311 through the heat exchange hole 2101, and can exchange heat with the heat exchange medium released into the exhaust space 2311. The mixed gas that has been subjected to the heat exchange can be expelled into the gas collection cavity 2322 through the exhaust space 2311 for centralized treatment. When the gas pressure in the gas collection cavity 2322 reaches a preset pressure value, the gas collection cavity 2322 communicates with the external environment through the pressure relief component 233. In this way, pressure is relieved by using the pressure relief component 233 to improve the reliability and safety of the battery 10.

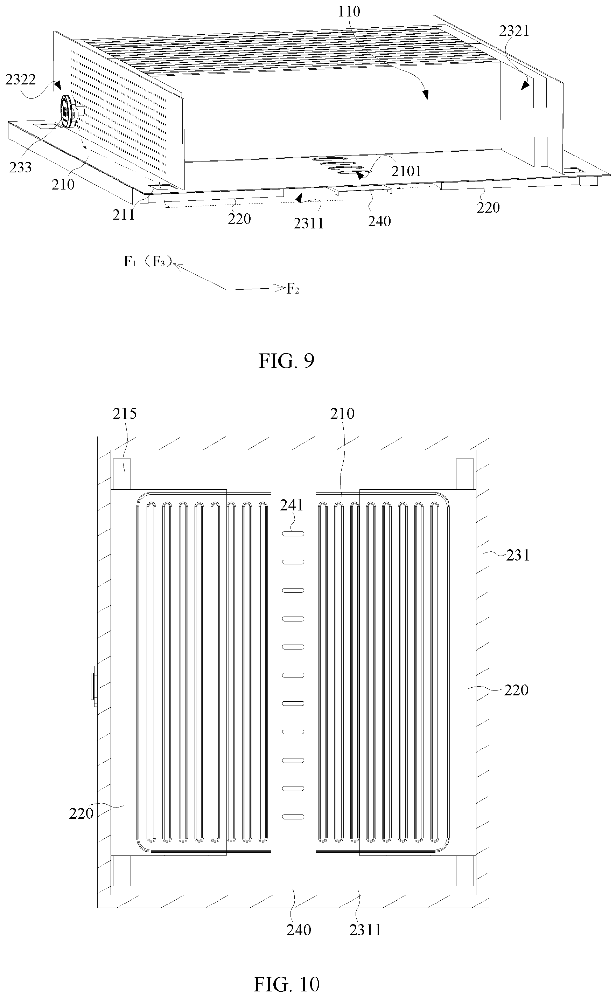

In some embodiments, referring to FIG. 3, the gas collection cavity 2322 surrounds the electrical cavity 2321. Referring to FIG. 9, a plurality of exhaust ports 211 spaced apart along a circumferential direction of the electrical cavity 2321 are disposed on the first heat exchange portion 210. Each of the exhaust ports 211 communicate with the exhaust space 2311 and the gas collection cavity 2322 separately.

"Exhaust port 211" means an opening that communicates with the exhaust space 2311 and the gas collection cavity 2322 separately and that runs through the first heat exchange portion 210. The shape of the exhaust port 211 is not particularly limited, as long as the shape enables communication with both the exhaust space 2311 and the gas collection cavity 2322.

The plurality of exhaust ports 211 improve the efficiency of the flow of the mixed gas into the gas collection cavity 2322, and improve the efficiency of thermal management.

Further, "The battery 10 includes a battery cell 110 and the box assembly 200, the box assembly 200 includes an electrical cavity 2321, and the battery cell 110 is accommodated in the electrical cavity 2321" may mean: the thermal management component 201 is configured to be a middle beam of the box assembly 200, and a plurality of electrical cavities 2321 are disposed and distributed on two sides of the thermal management component 201.

The electrical cavity 2321 can communicate with the exhaust space 2311. In this way, the emissions of the battery cell 110 can flow into the exhaust space 2311, and heat exchange is performed for this part of emissions by the second heat exchange portion 220.

The box assembly 200 is approximately H-shaped. To be specific, an upper opening and a lower opening are created on the box assembly 200 to define two electrical cavities 2321. The two openings are created on a side of one of the two electrical cavities 2321 and a side of the other electrical cavity respectively, the two sides being away from each other. The battery cells 110 may be placed in the electrical cavities 2321. For example, the thermal management component 201 includes two first heat exchange portions 210 spaced apart along the thickness direction of the first heat exchange portion 210. The box assembly 200 includes two battery frames 232 connected to the first heat exchange portions 210 in one-to-one correspondence and located on two opposite sides of the thermal management frame 231. Each of the first heat exchange portions 210 and the corresponding battery frame 232 define an electrical cavity 2321. Two heat exchange portions 210 and one thermal management frame 231 come together peripherally to form an exhaust space 2311.

As shown in FIG. 3, a battery module 100 may be disposed in each electrical cavity 2321. Each battery module 100 includes at least one battery cell 110. "The thermal management component 201 is configured to be a middle beam of the box assembly 200" may be understood to mean that a thermal management component 201 is disposed between two adjacent battery modules 100.

In this way, thermal management can be performed for the battery cells 110 of the two battery modules 100 and the emissions of the battery cells 100 by using one thermal management component 201. In addition, the overall structure of the battery 10 is more compact.

Referring to FIG. 4, the battery cell 110 includes a pressure relief mechanism 111. The pressure relief mechanism 111 is disposed toward the receiving portion 240.

The "pressure relief mechanism 111" may be an explosion-proof valve or another component capable of releasing, to the electrical cavity 2321, the emissions (gas) ejected in a case of thermal runaway of the battery cell 110. The form of the pressure relief component is not particularly limited herein.

In this way, the emissions ejected by the pressure relief mechanism 111 of the battery cell 110 can more smoothly flow into the exhaust space 2311 through the receiving portion 240.

In some embodiments (not shown in the drawings), a plurality of the battery cells 110 are disposed, and a plurality of the receiving portions 240 are disposed. The pressure relief mechanisms 111 of the plurality of battery cells 110 are configured to correspond one-to-one with the plurality of receiving portions 240.

In this way, the emissions ejected by the pressure relief mechanism 111 of the battery cell 110 can flow into the exhaust space 2311 through the corresponding receiving portion 240.

In some other embodiments, each battery module 100 includes a plurality of battery cells 110. A plurality of vent holes 241 corresponding one-to-one with the battery cells 110 are created on the receiving portion 240. Each of the vent holes 241 communicates with the electrical cavity 2321 and the exhaust space 2311 separately.

In this way, the emissions of the battery cells 110 can be made to reach the exhaust space 2311 through the corresponding vent holes 241.

In this embodiment, the receiving portion 240 is disposed on one side of the first heat exchange portion 210, the side being away from the battery cell 110. A plurality of heat exchange holes 2101 that correspond one-to-one with the battery cells 110 are created on the first heat exchange portion 210. In this way, the pressure relief mechanisms 111 of the plurality of battery cells 110 in the same electrical cavity 2321 correspond one-to-one with the plurality of heat exchange holes 2101 of the adjacent first heat exchange portion 210. The pressure relief mechanisms 111 of the plurality of battery cells 110 in the same electrical cavity 2321 correspond one-to-one with the plurality of vent holes 241 on the receiving portion 240.

In this way, when a battery cell 110 is thermally runaway, the emissions of the battery cell 110 can flow into the exhaust space 2311 through the corresponding heat exchange hole 2101 and the corresponding vent hole 241 on the receiving portion 240. Therefore, the heat exchange medium released into the exhaust space 2311 exchanges heat with this part of emissions, so that the temperature of the emissions ejected by the battery cell 110 is reduced greatly, thereby avoiding overtemperature in the battery 10 and greatly reducing the safety hazards of the battery 10.

In some embodiments, the battery 10 includes at least two battery modules 100. Each battery module 100 includes at least one battery cell 110 disposed in a corresponding electrical cavity 2321. A thermal management component 201 is disposed between two adjacent battery modules 100. In the two adjacent battery modules 100, the pressure relief mechanisms 111 of the battery cells 110 are oriented toward the thermal management component 201 located between the two adjacent battery modules 100. The corresponding electrical cavities 2321 of the two adjacent battery modules 100 both communicate with the exhaust space 2311 of the thermal management frame 231 of the thermal management component 201.

When a battery cell 110 of any battery module 100 is thermally runaway, heat exchange can be performed, by using the thermal management component 201, for the air stream ejected by the battery cell 110 into the exhaust space 2311. In this way, thermal management can be performed for both battery modules 100 by using one thermal management component 201, thereby effectively avoiding overtemperature in the battery 10, and improving the space utilization rate of the battery 10.

In these embodiments, in the two adjacent battery modules 100, the pressure relief mechanisms 111 of all the battery cells 110 are oriented toward the thermal management component 201 located between the two adjacent battery modules 100.

In these embodiments, all the interface pieces 221 of the thermal management component 201 can spray the heat exchange medium into the exhaust space 2311. The heat exchange medium sprayed by the interface pieces 221 into the exhaust space 2311 can exchange heat with the emissions flowing into the exhaust space 2311. The heat exchange medium can be expelled together with the emissions (gas) out of the exhaust space 2311 for centralized treatment. In this way, both battery modules 100 can be thermally managed by using the thermal management component 201, thereby effectively avoiding overtemperature in the battery 10, and improving the space utilization rate of the battery 10.

In some embodiments, referring to FIG. 4, the receiving portion 240 is disposed in the exhaust space 2311, and the receiving portion 240 is disposed as a baffle between the pressure relief mechanisms 111 of two adjacent battery cells 110 in two adjacent battery modules 100. The receiving portion 240 includes a receiving cavity 242 configured to receive the emissions of the battery cells 110, and a vent hole 241 that communicates with the electrical cavity 2321 and the exhaust space 2311 separately.

The "receiving portion 240" means a component disposed as a baffle between the pressure relief mechanisms 111 of two adjacent battery cells 110 to prevent the pressure relief mechanisms 111 of the two adjacent battery cells 110 from ejecting the emissions toward each other. If a plurality of battery cells 110 are disposed in a battery module 100, the receiving portion 240 may be an integrated component extending along the arrangement direction of the plurality of battery cells 110. Further, a plurality of receiving portions 240 may be disposed. The plurality of receiving portions 240 are spaced apart along the arrangement direction of the plurality of battery cells 110 of the same battery module 100, and the plurality of receiving portions 240 correspond one-to-one with the pressure relief mechanisms 111 of the battery cells 110. Each receiving portion 240 is disposed as a baffle at the pressure relief mechanism 111 of the corresponding battery cell 110, so as to prevent the pressure relief mechanisms 111 of the two adjacent battery cells 110 from ejecting emissions toward each other. Alternatively, the receiving portion 240 may be another component capable of preventing the pressure relief mechanisms 111 of the two adjacent battery cells 110 from ejecting emissions toward each other, without being particularly limited herein.

By virtue of the receiving portion 240, the pressure relief mechanisms 111 of the two adjacent battery cells 110 are prevented from ejecting emissions toward each other. In addition, the emissions ejected by the pressure relief mechanisms 111 of the battery cells 110 can flow into the exhaust space 2311 through the vent hole 241. Therefore, the heat exchange medium released into the exhaust space 2311 exchanges heat with this part of emissions, so that the temperature of the emissions ejected by the battery cells 110 is reduced greatly, thereby avoiding overtemperature in the battery 10 and greatly reducing the safety hazards of the battery 10.

In addition, the emissions ejected from the pressure relief mechanism 111 of the battery cell 110 flow into the exhaust space 2311 through the heat exchange hole 2101, the receiving cavity 242, and the vent hole 241, and can exchange heat with the heat exchange medium sprayed into the exhaust space 2311. The mixed gas that has been subjected to the heat exchange can be expelled into the gas collection cavity 2322 through the exhaust space 2311 for centralized treatment. When the gas pressure in the gas collection cavity 2322 reaches a preset pressure value, the gas collection cavity 2322 communicates with the external environment through the pressure relief component 233. In this way, pressure is relieved by using the pressure relief component 233 to improve the reliability and safety of the battery 10.

In some embodiments, referring to FIG. 4, the receiving portion 240 and the first heat exchange portion 210 come together peripherally to form a receiving cavity 242, and an opening is created on one side of the receiving cavity. The opening of the receiving cavity 242 communicates with the electrical cavity 2321 through the heat exchange hole 2101 of the first heat exchange portion 210. A vent hole 241 communicating with the exhaust space 2311 is created on one side of the receiving cavity 242, the side being away from the opening.

In this way, the emissions ejected from the pressure relief mechanism 111 of the battery cell 110 flow into the exhaust space 2311 through the heat exchange hole 2101, the receiving cavity 242, and the vent hole 241, and can exchange heat with the heat exchange medium released into the exhaust space 2311. The mixed gas that has been subjected to the heat exchange can be expelled through the exhaust space 2311 for centralized treatment. Therefore, the temperature of the emissions ejected by the battery cells 110 is reduced greatly by using the thermal management component 201, thereby avoiding overtemperature in the battery 10 and greatly reducing the safety hazards of the battery 10.

In some embodiments, the vent hole 241 is staggered from the pressure relief mechanism 111 of the adjacent battery cell 110.

This more effectively prevents the pressure relief mechanisms 111 of two adjacent battery cells 110 from ejecting emissions toward each other, and the emissions are made to flow into the exhaust space 2311 in a bent shape, so as to reduce the flow speed of the emissions and improve the safety of the battery 10.

In some other embodiments, referring to FIG. 6, each battery module 100 includes a plurality of battery cells 110 spaced apart along a third direction F3. A plurality of vent holes 241 corresponding one-to-one with the battery cells 110 in the adjacent electrical cavity 2321 are created on the receiving portion 240. The vent holes 241 are staggered from the pressure relief mechanisms 111 of the corresponding battery cells 110 along the third direction F3.

Because the vent holes 241 are staggered from the pressure relief mechanisms 111 of the corresponding battery cells 110 along the third direction F3, the emissions can flow into the exhaust space 2311 in a bent shape when the emissions flow into the exhaust space 2311 through the vent holes 241, thereby well preventing the pressure relief mechanisms 111 of the two adjacent battery cells 110 from ejecting emissions toward each other.

In some embodiments, referring to FIG. 4, the thermal management component 201 includes two receiving portions 240 located in the exhaust space 2311. The two first heat exchange portions 210 of the thermal management component 201 correspond one-to-one with the two receiving portions 240. The receiving portion 240 and the corresponding first heat exchange portion 210 come together peripherally to form a receiving cavity 242, and an opening is created on one side of the receiving cavity. The opening of the receiving cavity 242 communicates with the electrical cavity 2321 through the heat exchange hole 2101 of the corresponding first heat exchange portion 210. A vent hole 241 communicating with the exhaust space 2311 is created on one side of the receiving cavity 242, the side being away from the opening.

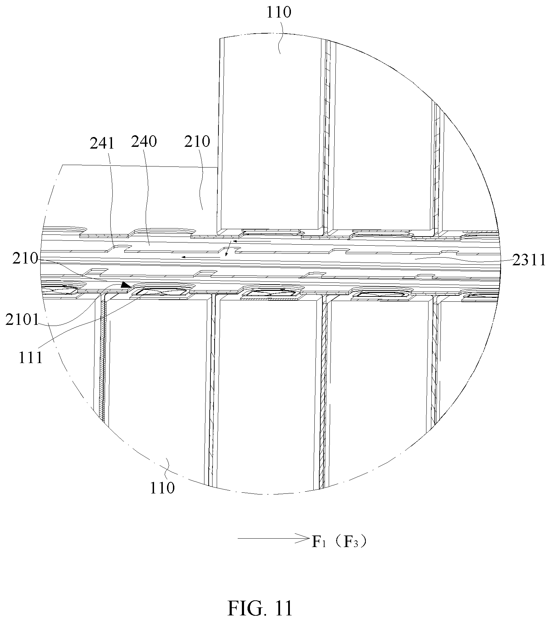

In some embodiments, referring to FIG. 11, the vent holes 241 on two adjacent receiving portions 240 are staggered from each other along the third direction F3, and are all staggered from the pressure relief mechanism 111 of the corresponding battery cell 110 along the third direction F3.

On the one hand, the vent holes 241 on the receiving portion 240 are staggered from the pressure relief mechanism 111 of the corresponding battery cell 110 along the third direction F3, thereby more effectively preventing the pressure relief mechanisms 111 of the two adjacent battery cells 110 from ejecting emissions toward each other. On the other hand, the vent holes 241 on the two receiving portions 240 are staggered from each other along the third direction F3, thereby preventing the emissions, which flow into the exhaust space 2311 through the vent holes 241 on the two receiving portions 240, from aiming at each other and causing perturbations.

In some embodiments, each battery module 100 includes a plurality of battery cells 110 spaced apart along the third direction F3. A plurality of interface pieces 221 spaced apart along the third direction F3 are disposed on the second heat exchange portion 220. The outlet 2211 of each interface piece 221 is disposed along a second direction F2. All the interface pieces 221 on the same second heat exchange portion 220 correspond one-to-one with the pressure relief mechanisms 111 of all the battery cells 110 of the adjacent battery module 100. The second direction F2 is at an angle to the third direction F3.

The second direction F2 is perpendicular to the third direction F3, the third direction F3 may be parallel to the length direction of the battery 10, and the second direction F2 may be parallel to the width direction of the battery 10. Alternatively, the third direction F3 may be parallel to the width direction of the battery 10, and the second direction F2 may be parallel to the length direction of the battery 10.

Because all the interface pieces 221 on the same second heat exchange portion 220 correspond one-to-one with the pressure relief mechanisms 111 of all the battery cells 110 of the adjacent battery module 100, when a battery cell 110 is thermally runaway, the emissions flow into the electrical cavity 2321 through the pressure relief mechanism 111 of the battery cell 110, and therefore, can flow into the exhaust space 2311 and be located at the corresponding interface piece 221. In this way, the corresponding interface piece 221 can release the heat exchange medium into the exhaust space 2311 in a case of thermal runaway of the battery cell 110. Therefore, the interface piece 221 can respond to the corresponding thermally runaway battery cell 110 in time, thereby more reliably avoiding overtemperature in the battery 10 and reducing the safety hazards of the battery 10.

The outlet 2211 of the interface piece 221 is at an angle to the center axis of the pressure relief mechanism 111 of the corresponding battery cell 110.

In a case of thermal runaway of the battery cell 110, the corresponding interface piece 221 can spray a heat exchange medium into the exhaust space 2311. The outlet 2211 of the interface piece 221 is at an angle to the center axis of the pressure relief mechanism 111 of the corresponding battery cell 110. Therefore, the heat exchange medium ejected from the outlet 2211 of the interface piece 221 is prevented from being sprayed toward the pressure relief mechanism 111, and well converges with emissions in the exhaust space 2311, where the emissions are ejected from the pressure relief mechanism 111. This not only avoids overtemperature in the battery 10, but also prevents the two air streams from generating perturbations, thereby effectively reducing the safety hazards.

In some embodiments, the pressure relief mechanism 111 of the battery cell 110 aims at the corresponding interface piece 221 sinuously.

The above arrangement enables the emissions ejected from the pressure relief mechanism 111 to flow to the interface piece 221 along a sinuous path and converge with the heat exchange medium in the exhaust space 2311, where the heat exchange medium is ejected from the outlet 2211 of the corresponding interface piece 221. This can reduce the flow speed of the emissions ejected from the pressure relief mechanism 111, and further prevent the two air streams from generating perturbations.

In some embodiments, the thermal management component 201 includes two second heat exchange portions 220 spaced apart along the second direction F2. An orthographic projection of the pressure relief mechanism 111 of the battery cell 110 of the battery module 100 on an adjacent thermal management component 201 lies between the two second heat exchange portions 220 of the thermal management component 201. A plurality of interface pieces 221 are disposed on each second heat exchange portion 220.

Understandably, the two second heat exchange portions 220 are located on two opposite sides of the pressure relief mechanism 111 of the battery cell 110 along the second direction F2 respectively. The second direction F2 may be parallel to the width direction of the battery cell 110.

With the above arrangement, in a case of thermal runaway of the battery cell 110 of the battery module 100, the emissions ejected from the pressure relief mechanism 111 of the battery cell 110 can flow into the exhaust space 2311. The heat exchange medium can be sprayed into the exhaust space 2311 by using the interface pieces 221 of the two second heat exchange portions 220, thereby improving the heat exchange effect, and reducing the safety hazards more effectively.

In some other embodiments, a battery 10 provided in an embodiment of this application includes a plurality of battery cells 110 and the thermal management component 201.

In some embodiments, the battery 10 includes two battery modules 100 and a box assembly 200. The box assembly includes a thermal management component 201 and a thermal management frame 231. The thermal management component 201 is disposed between the two battery modules 100. The thermal management component 201 includes two first heat exchange portions 210 that correspond one-to-one with the battery modules 100, and a second heat exchange portion 220. The box assembly 200 includes two battery frames 232. Both battery frames 232 are connected to the two opposite sides of the thermal management frames 231 along the thickness direction of the first heat exchange portion 210. The thermal management frame 231 and the two heat exchange portions 210 come together peripherally to form an exhaust space 2311. The first heat exchange portion 210 and the adjacent battery frame 232 come together peripherally to form an electrical cavity 2321 configured to accommodate the corresponding battery module 100. A heat exchange hole 2101 communicating with the electrical cavity 2321 and the exhaust space 2311 separately is created on the first heat exchange portion 210. The second heat exchange portion 220 is disposed in the exhaust space 2311. An interface piece 221 is disposed on the second heat exchange portion 220. The interface piece 221 is configured to spray a heat exchange medium into the exhaust space 2311 in a case of thermal runaway of the battery cell 110. The heat exchange holes 2101 on the first heat exchange portion 210 correspond one-to-one with the pressure relief mechanisms 111 of the corresponding battery cells 110.

When the battery 10 is in use, the first heat exchange portion 210 can contact the battery cell 110 of the battery module 100 to exchange heat with the battery cell 110. When a battery cell 110 is thermally runaway, the emissions ejected by the battery cell 110 flow into the exhaust space 2311 through the heat exchange hole 2101. This part of emissions can exchange heat with the sidewall of the heat exchange hole 2101 to cool down the emissions for a first time. The interface piece 221 is configured to be able to spray a heat exchange medium into the exhaust space 2311 in a case of thermal runaway of the battery cell 110. Therefore, the interface piece 221 can spray the heat exchange medium into the exhaust space 2311, and the heat exchange medium sprayed by the interface piece 221 into the exhaust space 2311 can exchange heat with the emissions flowing into the exhaust space 2311, so as to cool down the emissions for a second time. The heat exchange medium and the emissions that have been cooled down twice can be expelled out of the exhaust space 2311 together for centralized treatment. In this way, the battery cells 110 of both battery modules 100 and the emissions ejected by the battery cells 110 can be thermally managed by using the thermal management component 201, thereby avoiding overtemperature in the battery 10, and greatly reducing the safety hazards of the battery 10.

An electrical device provided in an embodiment of this application includes the battery 10.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description is relatively detailed, but constitutes no limitation on the patent scope hereof. It is hereby noted that several variations and improvements, which may be made to the embodiments by a person of ordinary skill in the art without departing from the concept of this application, fall within the protection scope of this application. Therefore, the protection scope of this application is subject to the claims appended hereto.

## Claims

1. A thermal management component, applicable to a battery (10), wherein the battery (10) comprises a battery cell (110), and the thermal management component (201) comprises:
a first heat exchange portion (210) and a second heat exchange portion (220), wherein the first heat exchange portion (210) is configured to exchange heat with the battery cell (110), and the second heat exchange portion (220) is configured to exchange heat with emissions of the battery cell (110).

2. The thermal management component according to claim 1, wherein the thermal management component (201) comprises an exhaust space (2311), the exhaust space (2311) is configured to receive or guide the emissions of the battery cell (110), and the exhaust space (2311) is configured to allow heat exchange between the emissions of the battery cell (110) and the second heat exchange portion (220).

3. The thermal management component according to claim 2, wherein the second heat exchange portion (220) comprises an interface piece (221) and an accommodation cavity (222);
the accommodation cavity (222) is configured to accommodate a heat exchange medium; and
the interface piece (221) is configured to communicate the accommodation cavity (222) and the exhaust space (2311) so that the heat exchange medium is able to reach the exhaust space (2311) through the interface piece (221).

4. The thermal management component according to claim 3, wherein an inlet of the interface piece (221) is connected to the accommodation cavity (222), and an outlet (2211) of the interface piece (221) is oriented toward the exhaust space (2311).

5. The thermal management component according to claim 4, wherein the exhaust space (2311) extends along a first direction, and an exit direction of the interface piece (221) intersects the first direction.

6. The thermal management component according to claim 4, wherein the thermal management component (201) further comprises a receiving portion (240), the receiving portion (240) is disposed corresponding to the battery cell (110) so as to allow the emissions of the battery cell (110) to reach the exhaust space (2311) through the receiving portion (240), and an exit direction of the interface piece (221) intersects a receiving direction of the receiving portion (240).

7. The thermal management component according to claim 6, wherein the thermal management component (201) comprises two interface pieces (221) disposed adjacent to each other along a second direction; and
along the second direction, the receiving portion (240) is disposed between the two adjacent interface pieces (221).

8. The thermal management component according to claim 6, wherein a plurality of interface pieces (221) spaced apart along a third direction are disposed on the second heat exchange portion (220), the outlet (2211) of each of the plurality of interface pieces (221) is disposed along a second direction, and the plurality of interface pieces (221) on a same second heat exchange portion (220) correspond one-to-one with a plurality of receiving portions (240); and
the second direction intersects the third direction.

9. The thermal management component according to any one of claims 3 to 8, wherein the interface piece (221) comprises a connecting channel and a switching portion, and the connecting channel is configured to be able to communicate the accommodation cavity (222) and the exhaust space (2311) when the switching portion is turned on.

10. The thermal management component according to claim 9, wherein the switching portion is configured to be a hot-melt structure, an electrically actuated switch, or a fragile structure.

11. The thermal management component according to any one of claims 2 to 10, wherein the thermal management component (201) comprises a thermal management frame (231), and the thermal management frame (231) and the first heat exchange portion (210) come together peripherally to form the exhaust space (2311); and
the second heat exchange portion (220) is disposed in the exhaust space (2311) to exchange heat with the emissions of the battery cell (110).

12. The thermal management component according to any one of claims 3 to 10, wherein the thermal management component (201) comprises an exhaust piece, the exhaust piece is configured to form the exhaust space (2311), and the first heat exchange portion (210), the second heat exchange portion (220), and the exhaust piece are stacked up.

13. The thermal management component according to claim 12, wherein the first heat exchange portion (210) and the exhaust piece are located on two sides of the second heat exchange portion (220) respectively.

14. The thermal management component according to claim 12, wherein the exhaust piece is located between the first heat exchange portion (210) and the second heat exchange portion (220).

15. The thermal management component according to any one of claims 3 to 11, wherein two second heat exchange portions (220) are disposed and stacked up, the exhaust space (2311) is defined between the two second heat exchange portions (220), and the interface piece (221) is disposed on a surface of at least one of the second heat exchange portions (220), the surface being oriented toward the exhaust space (2311).

16. The thermal management component according to claim 15, wherein two first heat exchange portions (210) are disposed on outer surfaces of the two second heat exchange portions (220) respectively.

17. A box assembly, wherein the box assembly (200) comprises the thermal management component (201) according to any one of claims 1 to 16.

18. The box assembly according to claim 17, wherein the thermal management component (201) is the thermal management component (201) according to any one of claims 12 to 13, and the thermal management component (201) is configured to be at least one of a top structure, a bottom structure, a side beam, or a middle beam of the box assembly (200).

19. The box assembly according to claim 17, wherein the thermal management component (201) is the thermal management component (201) according to any one of claims 15 to 16, and the thermal management component (201) is configured to be a middle beam of the box assembly (200).

20. A battery, wherein the battery (10) comprises the battery cell (110) and the box assembly (200) according to any one of claims 17 to 19, the box assembly (200) comprises an electrical cavity (2321), and the battery cell (110) is accommodated in the electrical cavity (2321).

21. The battery according to claim 20, wherein the box assembly (200) is the box assembly (200) according to any one of claims 17 to 18, and the electrical cavity (2321) is located on one side of the thermal management component (201).

22. The battery according to claim 20, wherein the box assembly (200) is the box assembly (200) according to claim 19, and a plurality of electrical cavities (2321) are created and distributed on two sides of the thermal management component (201).

23. A battery, wherein the battery comprises a plurality of battery cells (110) and the thermal management component (201) according to any one of claims 1 to 16.

24. The battery according to any one of claims 20 to 23, wherein the box assembly (200) is the thermal management component (201) according to any one of claims 6 to 16, the battery cell (110) comprises a pressure relief mechanism (111), and the pressure relief mechanism (111) is disposed toward the receiving portion (240).

25. The battery according to claim 24, wherein a plurality of the battery cells (110) are disposed, a plurality of the receiving portions (240) are disposed, and the pressure relief mechanisms (111) of the plurality of battery cells (110) are configured to correspond one-to-one with the plurality of receiving portions (240).

26. An electrical device, wherein the electrical device comprises the battery (10) according to any one of claims 20 to 25.
